# FASCICULE DE BREVET EUROPEEN

(11) **EP 3 309 069 B1**
(45) Date de publication et mention de la délivrance du brevet: **17.04.2019**
(21) Numéro de dépôt: 17194173.5
(22) Date de dépôt: 29.09.2017
(51) Int. Cl.: B64C 27/00, B64C 27/35, B64C 27/48, B64C 27/51

(54) **AMORTISSEUR DE TRAINEE INTEGRE A L INTERIEUR D'UNE PALE D'UN ROTOR**
SCHWENKDÄMPFER, DER IM INNERN EINES ROTORBLATTS INTEGRIERT IST
A LEAD-LAG DAMPER INTEGRATED INSIDE A BLADE OF A ROTOR

(30) Priorité: 14.10.2016 FR 1601495
(43) Date de publication de la demande: 18.04.2018
(73) Titulaire: Airbus Helicopters, 13725 Marignane Cedex (FR)
(72) Inventeur: MAZET, Stéphane, 13340 Rognac (FR); BIHEL, Jean-Romain, 13740 Le Rove (FR); BERTHALON, Sylvain, 13880 Vélaux (FR); FOURNIER, Mathias, 13090 Aix en Provence (FR)
(74) Mandataire: GPI & Associés

(56) Documents cités:
- EP-A1- 0 615 904
- EP-A1- 1 640 266
- EP-A1- 2 867 558
- EP-A2- 0 097 885
- FR-A2- 2 263 151
- US-A- 4 676 720
- US-A- 5 228 834
- US-A1- 2016 176 279

## Description

La présente invention se trouve dans le domaine technique des rotors d'aéronefs à voilures tournantes et plus particulièrement des moyens d'amortissement des mouvements, notamment en traînée, des pales de ces rotors. L'invention concerne l'implantation de tels moyens d'amortissement à l'intérieur des pales d'un rotor d'un aéronef à voilure tournante.

L'invention concerne un amortisseur de traînée selon la revendication 1 intégré à l'intérieur de la pale d'un rotor d'un aéronef à voilure tournante ainsi qu'une pale selon la revendication 15 équipée d'un tel amortisseur et un rotor selon la revendication 20 d'un aéronef à voilure tournante muni de telles pales.

De façon générale, un rotor d'un aéronef à voilure tournante comporte un moyeu entraîné en rotation selon un axe de rotation sensiblement vertical par un arbre de sortie d'une boite de transmission principale de puissance ainsi qu'au moins deux pales fixées respectivement au moyeu par l'intermédiaire d'un ou plusieurs moyen(s) d'articulation approprié(s), par exemple, une butée sphérique lamifiée dédiée à chaque pale. Un manchon peut également être agencé entre la pale et le moyeu et fixé à l'emplanture de la pale, la butée sphérique reliant alors le manchon au moyeu.

Cette butée sphérique lamifiée permet alors à la pale de pouvoir débattre selon les trois rotations suivantes :
- une rotation autour d'un axe de battement sensiblement horizontal,
- une rotation autour d'un axe de traînée sensiblement vertical, et
- une rotation autour d'un axe de pas de la pale, cet axe de pas étant situé sensiblement longitudinalement selon l'envergure de la pale.

Ces débattements angulaires peuvent être, au cours de la rotation du rotor, différents pour chaque pale en fonction de sa position en azimut. De plus, les oscillations de chaque pale, notamment autour de l'axe de traînée, peuvent se coupler de façon instable avec les mouvements ou les modes de déformations élastiques de la cellule de l'aéronef en vol, ainsi que ceux de la cellule et de son train d'atterrissage lorsque cet aéronef est posé au sol. De tels phénomènes, connus sous le nom de « résonance sol » et « résonance air », peuvent être dangereux pour l'aéronef lorsque la fréquence propre des oscillations des pales dans les axes fixes liés à l'aéronef est voisine de l'une des fréquences propres des oscillations de l'aéronef dans les mêmes axes.

Afin d'éviter des couplages catastrophiques entre les mouvements en traînée des pales et ceux de la cellule de l'aéronef ou bien ceux de la cellule et de son train d'atterrissage, un moyen d'amortissement est introduit pour chaque pale, selon l'axe de traînée de chaque pale et respectivement lié à une pale. Un tel moyen d'amortissement, dénommé « amortisseur de traînée », subit des mouvements forcés dus aux mouvements par rapport aux axes de pas, de battement et de traînée de la pale. L'amortisseur de traînée n'influe cependant que faiblement sur ces mouvements.

L'amortisseur de traînée subit également des mouvements à la fréquence propre de traînée de la pale. Ces mouvements ne sont pas amortis naturellement, par exemple par les efforts aérodynamiques. Cet amortisseur de traînée intervient par conséquent pour s'opposer à tout phénomène vibratoire. L'amortissement du débattement des pales en traînée, en vue d'assurer la stabilité de l'aéronef, permet ainsi de prévenir les phénomènes de résonance sol et de résonance air.

Cet amortissement peut notamment être obtenu par l'utilisation d'amortisseurs de traînée reliant chaque pale au moyeu du rotor tel que décrit par exemple dans le document FR 2427251. Cet amortissement peut également être réalisé par l'implantation d'un amortisseur de traînée entre deux pales adjacentes tel que décrit par exemple dans le document FR 2630703. On parle alors d'« amortisseurs de traînée interpales ».

Cet amortisseur de traînée peut aussi être agencé à l'intérieur de la pale lorsqu'elle est fixée directement au moyeu, tel que décrit par exemple dans le document FR 2305343, ou bien à l'intérieur d'un manchon lorsque la pale en comporte un, tel que décrit par exemple dans les documents FR 2228663 et FR 2263151.

Les documents EP 1640266, EP 0097885, US 4676720 et US 5228834 décrivent également des dispositifs d'amortissement de traînée intégrés dans un manchon permettant de relier une pale au moyeu d'un rotor.

Quelle que soit leur implantation, ces amortisseurs de traînée comportent des moyens de rappel élastique à raideur et amortissement déterminés, de type visqueux ou sec, pour combattre les phénomènes de résonance. Par exemple, on connait le document FR 2929675 qui décrit un amortisseur de traînée viscoélastique formé par des éléments rigides parallèles entre eux et solidarisés par l'intermédiaire de couches de liaison en matériau élastomère. Cet amortisseur de traînée viscoélastique comporte un plan de symétrie transversal.

Pour un agencement d'un amortisseur de traînée à l'intérieur de la pale, le moyeu est généralement, selon les documents cités précédemment, en matériaux composites et a une forme en étoile. Ce moyeu se décompose en un corps central et des bras flexibles. Chaque pale ou bien chaque manchon est relié d'une part au moyeu par l'intermédiaire de la butée sphérique et d'autre part à un bras flexible par une liaison à rotule et des moyens élastiques et/ou élastomères formant l'amortisseur de traînée proprement dit. Cette liaison à rotule est liée à un bras flexible avec un degré de liberté en translation selon l'axe longitudinal de la pale.

Cependant, l'utilisation d'un amortisseur de traînée externe à la pale, qu'il soit interpale ou bien agencé entre la pale et le moyeu, rend difficile un carénage aérodynamique complet de la pale. En conséquence, cette utilisation est génératrice de l'apparition d'une trainée aérodynamique et de perturbations aérodynamiques qui peuvent être importantes.

De même, l'utilisation d'un manchon agencé entre la pale et le moyeu comporte des appendices correspondant par exemple aux moyens de fixation du manchon, rendant difficile son carénage et/ou susceptibles de générer l'apparition d'une trainée aérodynamique et de perturbations aérodynamiques.

Des solutions de carénage d'un manchon ont tout de même été développées, comme décrit dans le document EP 2778051. Mais ces solutions présentent généralement une discontinuité entre la forme profilée de la pale et le carénage du manchon, qui réduit l'efficacité de ce carénage et le gain sur les performances aérodynamiques de la pale.

L'absence de manchon facilite un carénage de la zone de l'emplanture de la pale. Par exemple, le document FR 2898581 décrit une pale comportant un longeron se répartissant en une branche inférieure et une branche supérieure au niveau de l'emplanture de la pale, un amortisseur de traînée agencé à l'intérieur de la pale ainsi qu'une manchette creuse et carénée. La manchette est solidaire des branches inférieure et supérieure, participant ainsi à la transmission des efforts, et est carénée, assurant une continuité avec la forme profilée de la pale et contribuant ainsi à limiter la trainée aérodynamique et les perturbations aérodynamiques affectant la pale.

Les mouvements de chaque pale, autour de l'axe de traînée, et principalement dans un plan perpendiculaire à l'axe de rotation du moyeu du rotor, ainsi qu'autour des axes de battement et de pas, provoquent l'apparition d'efforts importants au niveau de l'amortisseur de traînée auquel la pale est liée. Toutefois, ces efforts ne sont pas toujours dissipés entièrement par l'amortisseur de traînée selon leurs intensités, en particulier sur les aéronefs de fort tonnage. En conséquence, des efforts parasites apparaissent dans la pale et en particulier au niveau de la butée sphérique. Ces efforts parasites contribuent notamment à dégrader la butée sphérique et, par suite, à diminuer sa fiabilité et sa durée de vie.

Enfin, le moyeu doit être dimensionné afin de résister aux efforts transmis entre le moyeu et chaque pale, et en particulier aux forces centrifuges consécutives à la rotation des pales. Pour un aéronef de fort tonnage, ces forces centrifuges peuvent être importantes et entraîner la nécessité d'un corps central du moyeu aux dimensions importantes, notamment s'il est réalisé en matériaux composites, ces dimensions importantes rendant difficile son implantation sur le rotor de l'aéronef.

L'arrière plan technologique de l'invention comporte également les documents US 2016/0176279, EP 0615904 et EP 2867558.

La présente invention a alors pour objet un amortisseur de traînée pour les pales d'un rotor d'aéronef à voilure tournante permettant de s'affranchir des limitations mentionnées ci-dessus, notamment afin de limiter, voire supprimer, les efforts parasites apparaissant au niveau de la pale et de la butée sphérique reliant une pale au moyeu du rotor et d'augmenter ainsi la fiabilité de chaque butée sphérique.

La présente invention a également pour but de permettre le carénage de chaque pale du rotor sensiblement jusqu'à son emplanture limitant ainsi sa traînée aérodynamique et l'apparition de perturbations aérodynamiques affectant la pale et le rotor lors des vols de l'aéronef.

La présente invention a aussi pour objet une pale équipée d'un tel amortisseur de traînée ainsi que d'un rotor muni de telles pales.

Selon l'invention, un amortisseur de traînée est destiné à une pale d'un rotor d'aéronef à voilure tournante. Le rotor comporte au moins deux pales et un moyeu entraîné en rotation. Le rotor entraine ainsi en rotation les pales. L'amortisseur de traînée selon l'invention équipe de préférence chaque pale du rotor.

Cet amortisseur de traînée selon l'invention comporte :
- un axe longitudinal,
- une liaison à rotule destinée à être reliée au moyeu,
- deux armatures, une des deux armatures étant dénommée « armature intérieure » et munie d'une cage dans laquelle est agencée la liaison à rotule, l'autre des deux armatures étant dénommée « armature extérieure » et destinée à être solidarisée à la pale, et
- un organe en matériau élastomère agencé entre l'armature intérieure et l'armature extérieure.

La cage peut faire partie intégrante de l'armature intérieure et être formée par un logement de cette armature intérieure. De préférence, cette cage est une pièce rapportée et distincte de l'armature intérieure, fixée par exemple au moyen de vis sur cette armature intérieure.

L'amortisseur de traînée selon l'invention est particulièrement adapté pour les pales d'un rotor principal, qui constitue un rotor de sustentation, voire de propulsion, d'un aéronef à voilure tournante. Toutefois, un tel amortisseur de traînée peut aussi équiper les pales d'un rotor auxiliaire anticouple ou bien les hélices propulsives ou de traction d'un aéronef.

L'organe en matériau élastomère est constitué principalement par un matériau en élastomère ou bien un matériau aux propriétés mécaniques équivalentes. L'armature intérieure et l'armature extérieure sont suffisamment rigides pour résister aux contraintes imposées par les mouvements des pales ainsi qu'aux efforts transitant dans ces pales. L'armature intérieure et l'armature extérieure sont par exemple réalisées en métal ou bien en matériaux composites.

L'amortisseur de traînée selon l'invention est remarquable en ce que les deux armatures et l'organe en matériau élastomère sont agencés de part et d'autre de la cage et s'étendent, au moins selon l'axe longitudinal de l'amortisseur de traînée, au-delà d'une zone centrale dans laquelle est située la cage, cette zone centrale couvrant longitudinalement au moins une longueur égale à la longueur de la cage, afin que des mouvements relatifs entre les deux armatures consécutifs aux mouvements de la pale soient amortis par des déformations de l'organe en matériau élastomère de l'amortisseur de traînée selon l'invention, l'amortisseur de traînée étant destiné à être agencé au moins partiellement à l'intérieur de la pale.

L'axe longitudinal de l'amortisseur de traînée est sensiblement confondu avec l'axe longitudinal de la pale dans laquelle est agencé l'amortisseur de traînée.

En effet, une pale s'étend longitudinalement selon son envergure d'une première extrémité située à l'emplanture de la pale et destinée à être fixée au moyeu du rotor vers une deuxième extrémité dite extrémité libre. Par rapport au rotor, on comprend que la pale s'étend radialement de la première extrémité vers la deuxième extrémité. On remarque que le terme « longitudinal » se comprend au sens de l'envergure d'une pale, cet axe longitudinal de la pale s'étendant selon l'envergure de la pale et étant généralement confondu avec l'axe de pas de la pale.

De plus, l'amortisseur de traînée comporte un axe transversal sensiblement perpendiculaire à l'axe longitudinal de l'amortisseur de traînée. Une fois l'amortisseur de traînée agencé dans la pale, cet axe transversal s'étend transversalement d'un bord d'attaque vers un bord de fuite de la pale. Enfin, l'amortisseur de traînée comporte un axe vertical sensiblement perpendiculaire à son axe transversal et à son axe longitudinal.

La pale comprend traditionnellement au moins un longeron ainsi qu'un revêtement extérieur dénommé également « peau ». La surface extérieure de cette peau constitue majoritairement une succession continue de profils aérodynamiques. De la sorte, au moins un longeron fixe via une butée sphérique directement la pale au moyeu ou bien éventuellement par l'intermédiaire d'un manchon.

L'amortisseur de traînée selon l'invention comporte la zone centrale, une zone dite « amont » et une zone dite « aval ». Les termes « amont » et « aval » s'entendent selon l'axe longitudinal de l'amortisseur de traînée et de la pale et selon le sens de l'envergure de la pale, de la première extrémité de la pale vers son extrémité libre. La zone amont est située en amont de la zone centrale et située entre l'emplanture de la pale et la zone centrale. La zone aval est située en aval de la zone centrale et située entre l'extrémité libre de la pale et la zone centrale. La zone centrale est adjacente à la zone amont et à la zone aval. Ces zones sont de préférence délimitées respectivement par un plan vertical sensiblement perpendiculaire à l'axe longitudinal de l'amortisseur de traînée. La longueur de la zone centrale selon l'axe longitudinal est au moins égale à la longueur de la cage selon cet axe longitudinal.

Les deux armatures, à savoir l'armature intérieure et l'armature extérieure, sont agencées de part et d'autre de la cage en suivant l'axe longitudinal et se situent donc de part et d'autre d'un premier plan vertical perpendiculaire à l'axe longitudinal et passant par le centre de la cage de l'armature intérieure, ce centre de la cage correspondant au centre de rotation de la liaison à rotule de l'amortisseur de traînée. Les deux armatures couvrent ainsi les zones amont, centrale et aval. De la sorte, les deux armatures s'étendent au-delà de la zone centrale située autour de la cage. De plus, les deux armatures sont également agencées de part et d'autre de la cage en suivant l'axe transversal et se situent donc de part et d'autre d'un deuxième plan vertical perpendiculaire à l'axe transversal et passant par le centre de la cage. Enfin, les deux armatures sont également agencées de part et d'autre de la cage en suivant l'axe vertical et se situent donc de part et d'autre d'un troisième plan horizontal perpendiculaire à l'axe vertical et passant par le centre de la cage.

L'armature intérieure et l'armature extérieure comportent respectivement au moins deux parois. De plus, l'armature intérieure comporte au moins une cloison principale reliant au moins deux parois de cette armature intérieure. Chaque cloison principale est par exemple parallèle à l'axe vertical.

L'armature extérieure peut également comporter au moins une cloison principale reliant entre elles au moins deux parois de cette armature extérieure. Toutefois, l'armature extérieure peut également comporter des parois distinctes, non reliées rigidement entre elles par un élément de cette armature extérieure.

Les formes et les dimensions des armatures intérieure et extérieure sont imposées par la forme intérieure de la pale dans laquelle l'amortisseur de traînée selon l'invention est agencé. Par exemple, les deux armatures sont respectivement symétriques par rapport d'une part au deuxième plan vertical et d'autre part au troisième plan horizontal, ces deux plans passant par le centre de la cage de l'armature intérieure.

Les deux armatures ont de préférence une forme effilée selon l'axe longitudinal de l'amortisseur de traînée selon l'invention. Ainsi, la section de chaque armature prise perpendiculairement à cet axe longitudinal diminue selon l'envergure de la pale de son emplanture vers son extrémité libre afin de s'adapter à la forme de la pale dans laquelle l'amortisseur de traînée est agencé. Toutefois, les deux armatures peuvent aussi être respectivement symétriques par rapport au premier plan vertical et passant par le centre de la cage lorsque cette symétrie est en adéquation avec la forme intérieure de la pale.

L'organe en matériau élastomère est également agencé de part et d'autre de la cage par rapport aux premier et deuxième plans verticaux passant par le centre de la cage ainsi que par rapport au troisième plan horizontal passant par le centre de la cage. L'organe en matériau élastomère s'étend ainsi au-delà de la zone centrale située autour de la cage et couvre au moins les zones amont et aval.

Par ailleurs, les zones amont et aval ont respectivement une longueur selon l'axe longitudinal supérieure à celles de la zone centrale dans laquelle sont situées la cage et la liaison à rotule. De fait, la surface de l'organe en matériau élastomère selon l'axe longitudinal qui couvre au moins les zones amont et aval est au moins égale au double de la surface utilisée traditionnellement par le matériau en élastomère agencé uniquement dans la zone centrale d'un amortisseur de traînée interne à une pale, tel que décrit par exemple dans les documents FR 2305343 et FR 2228663.

Par exemple, les zones amont et aval ont des dimensions selon l'axe longitudinal au moins égales au double de celles de la zone centrale.

En conséquence, lorsque l'amortisseur de traînée est agencé dans une pale, la zone aval occupe une partie de l'intérieur de la pale traditionnellement occupée par un matériau de remplissage tel que de la mousse.

L'organe en matériau élastomère est agencé entre l'armature intérieure et l'armature extérieure et est solidaire avec chacune de ces deux armatures. L'organe en matériau élastomère est par exemple collé sur chacune des deux armatures. L'organe en matériau élastomère adhère de préférence aux parois et aux cloisons respectives de l'armature intérieure et de l'armature extérieure. Toutefois, l'organe en matériau élastomère peut adhérer uniquement aux parois respectives de l'armature intérieure et de l'armature extérieure ou bien uniquement à leurs cloisons. L'organe en matériau élastomère peut également adhérer à une partie des parois de l'armature intérieure et de l'armature extérieure ainsi qu'à une partie de leurs cloisons.

De plus, l'organe en matériau élastomère permet ainsi de relier les parois de l'armature extérieure par l'intermédiaire de l'armature intérieure et éventuellement des cloisons secondaires de l'armature extérieure, en particulier lorsque l'armature extérieure comporte des parois distinctes.

Dans tous les cas, l'organe en matériau élastomère permet de la sorte des déplacements relatifs limités des deux armatures l'une par rapport à l'autre s'accompagnant de déformations de l'organe en matériau élastomère, par exemple suite à l'application d'efforts sur l'une et/ou l'autre de ces deux armatures. Ces déformations de l'organe en matériau élastomère permettent ainsi une dissipation d'énergie par une transformation en chaleur d'au moins une partie, voire de la totalité des efforts appliqués sur l'armature intérieure et/ou l'armature extérieure. En conséquence, ces efforts sont au moins partiellement voire totalement dissipés par ces déformations de l'organe en matériau élastomère.

L'amortisseur de traînée est destiné à équiper chaque pale d'un rotor d'un aéronef à voilure tournante. Chaque pale est configurée pour être liée à un moyeu de ce rotor par l'intermédiaire d'une butée sphérique. L'amortisseur de traînée est agencé au moins partiellement à l'intérieur de la pale, à proximité de son emplanture. De préférence, l'amortisseur de traînée est agencé en totalité à l'intérieur de la pale. L'armature extérieure de l'amortisseur de traînée est alors solidaire de la pale et l'armature intérieure est reliée au moyeu par l'intermédiaire de la liaison à rotule. Le moyeu a par exemple une forme en étoile telle que décrite dans les documents FR 2305343 et FR 2228663. La liaison à rotule est liée au moyeu de préférence avec au moins un degré de liberté en translation selon l'axe longitudinal de la pale, par exemple par l'intermédiaire d'une liaison à pivot glissant.

Comme évoqué précédemment, lorsque le rotor est en rotation, chaque pale du rotor peut débattre en rotation autour des axes de traînée, de battement et/ou de pas et transmettre des efforts importants directement à l'amortisseur de traînée auquel elle est liée. Avantageusement, l'amortisseur de traînée selon l'invention permet, l'organe élastomère s'étendant au-delà de la zone centrale, de dissiper entièrement ces efforts, y compris pour les aéronefs de fort tonnage. En conséquence, aucun effort parasite n'apparaît dans la pale et en particulier au niveau de la butée sphérique, ce qui permet d'améliorer la durée de vie de la butée sphérique.

Avantageusement, l'amortisseur de traînée selon l'invention contribue ainsi à assurer d'une part la stabilité de l'aéronef et à prévenir les phénomènes de résonance sol et de résonance air et d'autre part d'éviter l'apparition d'efforts parasites dans la pale et d'améliorer ainsi sa fiabilité.

Cette amélioration du comportement de la pale est consécutive à l'augmentation des dimensions de l'organe en matériau élastomère utilisé, qui occupe en effet au moins les zones amont et aval, la zone aval occupant une partie de l'intérieur de la pale traditionnellement occupée par un matériau de remplissage.

L'organe en matériau élastomère comporte plusieurs blocs distincts. Avantageusement, chaque bloc en matériau élastomère peut ainsi se déformer indépendamment de chaque autre bloc de l'organe en matériau élastomère, bien que chaque bloc soit solidaire de l'armature intérieure et de l'armature extérieure. En conséquence, l'amortisseur de traînée selon l'invention permet de dissiper plus efficacement les efforts induits par les déformations de l'organe en matériau élastomère consécutives aux mouvements de la pale. Par exemple l'organe en matériau élastomère comporte au moins deux blocs distincts, au moins un premier bloc agencé dans la zone amont et au moins un deuxième bloc agencé dans la zone aval.

En outre, l'utilisation de blocs distincts évite avantageusement qu'une défaillance sur une partie de l'organe en matériau élastomère, telle une déchirure sur un bloc, ne se propage aux autres blocs de l'organe en matériau élastomère.

De plus, l'amortisseur de traînée selon l'invention intervient principalement pour amortir les mouvements de la pale autour de son axe de traînée, principalement dans un plan perpendiculaire à l'axe de rotation du moyeu du rotor, qui génèrent des déplacements relatifs des deux armatures de l'amortisseur de traînée, principalement parallèlement à l'axe transversal de la pale, et, par suite, l'apparition d'efforts induits par les déformations de l'organe en matériau élastomère qui sont sensiblement parallèles à cet axe transversal et, par suite, sensiblement parallèles à l'axe transversal de l'amortisseur de traînée. De fait, chaque bloc de l'organe en matériau élastomère est sollicité principalement en cisaillement.

Afin de s'adapter au mieux à ces sollicitations en cisaillement de l'organe en matériau élastomère, l'amortisseur de traînée peut comporter des parois et des cloisons transversales, à savoir sensiblement parallèles à son axe transversal afin de maximiser la dimension transversale de chaque bloc de l'organe en matériau élastomère et d'optimiser principalement le comportement en cisaillement de l'organe en matériau élastomère.

L'amortisseur de traînée peut également comporter des parois et des cloisons constituées par des formes non planes et adaptées aux sollicitations en cisaillement de l'organe en matériau élastomère. Par exemple, certaines closions de l'armature intérieure et/ou de l'armature extérieure peuvent être de forme partiellement cylindrique autour d'un axe passant sensiblement par le point focal de la butée sphérique reliant la pale au moyeu et parallèle à l'axe vertical de l'amortisseur de traînée selon l'invention. Ce point focal de la butée sphérique peut être confondu avec le centre de cette butée sphérique ou bien être légèrement décalé vis-à-vis de ce centre selon les déformations subies par cette butée sphérique. Ces closions ont alors pour forme un tronc de cylindre à section circulaire.

Selon un autre exemple, certaines closions de l'armature intérieure et/ou de l'armature extérieure peuvent être de forme partiellement sphérique centrée sur ce point focal de la butée sphérique. De même, les parois peuvent également être de forme partiellement sphérique centrée sur ce point focal de la butée sphérique.

L'amortisseur de traînée peut également comporter des parois et des cloisons qui peuvent être pour certaines planes et sensiblement parallèles à l'axe transversal de l'amortisseur de traînée et pour d'autres non planes.

L'armature intérieure et l'armature extérieure de l'amortisseur de traînée comportent plusieurs cloisons secondaires qui sont en contact avec l'organe en matériau élastomère. Ces cloisons secondaires permettent ainsi d'augmenter les surfaces de contact entre l'organe en matériau élastomère et chacune des deux armatures. Ces cloisons secondaires peuvent être agencées aussi bien dans la zone amont que dans la zone aval de l'amortisseur de traînée selon l'invention.

Comme précédemment évoqué, ces cloisons secondaires peuvent être sensiblement transversales, à savoir sensiblement parallèles à l'axe transversal de l'amortisseur de traînée ou bien non planes, par exemple de forme cylindriques ou sphériques, afin de s'adapter au mieux aux sollicitations en cisaillement de l'organe en matériau élastomère.

Par exemple, chaque cloison principale et chaque cloison secondaire des deux armatures sont parallèles au premier plan vertical et donc perpendiculaires à son axe longitudinal.

Chaque cloison principale et chaque cloison secondaire de ces deux armatures peuvent également être de forme sphérique, centrée au point focal de la butée sphérique reliant la pale au moyeu.

Ces cloisons secondaires séparent l'organe en matériau élastomère et multiplient le nombre de blocs de cet organe en matériau élastomère. Chaque bloc de l'organe en matériau élastomère est alors agencé entre une cloison principale ou bien secondaire de l'armature intérieure et une cloison principale ou bien secondaire de l'armature extérieure dans chaque zone comportant de telles cloisons. Chaque bloc est de préférence solidarisé à ces deux cloisons. En conséquence, et comme évoqué précédemment, l'augmentation du nombre de blocs permet d'améliorer l'efficacité de l'amortisseur de traînée en dissipant plus efficacement les efforts induits par les déformations de l'organe en matériau élastomère consécutives aux mouvements de la pale.

Dans un exemple qui ne fait pas partie de l'invention, mais qui pourrait être utile pour la comprendre, ces cloisons secondaires peuvent séparer partiellement l'organe en matériau élastomère et être positionnées dans des fentes ou des formes adaptées de l'organe en matériau élastomère. Dans ce cas, ces cloisons secondaires ne divisent pas l'organe en matériau élastomère en plusieurs blocs.

Le choix d'un ou plusieurs blocs agencés au niveau de ces cloisons principale(s) et secondaire(s) des deux armatures peut être lié par exemple au mode de fabrication de l'organe en matériau en élastomère ou bien au niveau des contraintes subies par l'amortisseur de traînée.

Par ailleurs, un bloc de l'organe en matériau élastomère peut être agencé entre l'armature intérieure et l'armature extérieure de telle sorte qu'une section de ce bloc est sensiblement constante le long de ce bloc. Cette section sensiblement constante est par exemple perpendiculaire à une ligne moyenne de ce bloc.

De même, un bloc de l'organe en matériau élastomère peut être agencé entre l'armature intérieure et l'armature extérieure de telle sorte qu'une section de ce bloc varie le long de ce bloc afin que ce bloc soit sollicitée de façon homogène et avec des contraintes sensiblement égales dans chacune de ses sections lors des mouvements relatifs entre l'armature intérieure et l'armature extérieure. Cette section variable est par exemple perpendiculaire à une ligne moyenne de ce bloc. L'épaisseur de ce bloc est par exemple variable selon l'axe longitudinal de l'amortisseur de traînée et selon une loi prédéfinie.

Par ailleurs, afin d'augmenter la raideur d'un bloc de l'organe en matériau élastomère et de limiter ainsi ses déformations, un insert peut être noyé dans ce bloc. Cet insert est par exemple métallique en matériaux composites ou bien en matière plastique.

Par ailleurs, afin d'éviter l'apparition d'efforts parasites additionnels au sein de l'amortisseur de traînée et par suite de la pale, les efforts induits par les déformations de l'organe en matériau élastomère consécutives aux mouvements relatifs des deux armatures doivent être sensiblement équilibrés et uniformes de part et d'autre de la cage.

Les mouvements relatifs entre les deux armatures de l'amortisseur de traînée étant principalement parallèles à l'axe transversal de l'amortisseur de traînée, la répartition de l'organe en matériau élastomère de part et d'autre de la cage est configurée afin que les efforts induits par les déformations de l'organe en matériau élastomère consécutives à ces mouvements relatifs des deux armatures soient répartis de façon sensiblement équilibrée et uniforme de part et d'autre de la cage au moins vis-à-vis du premier plan vertical passant par le centre de la cage.

De préférence et afin que les efforts induits par les déformations de l'organe en matériau élastomère consécutives à ces mouvements relatifs entre les deux armatures soient répartis de façon sensiblement uniforme et équilibrée de part et d'autre de la cage d'une part vis-à-vis du premier plan vertical passant par le centre de la cage et d'autre part vis-à-vis du deuxième plan vertical passant par le centre de la cage et du troisième plan horizontal passant par le centre de la cage, la répartition de l'organe en matériau élastomère de part et d'autre de la cage est configurée afin que le barycentre de ces efforts induits soit situé au centre de la cage. Ainsi, ces efforts induits sont parfaitement équilibrés et uniformes de part et d'autre de la cage évitant l'apparition d'efforts parasites additionnels au sein de l'amortisseur de traînée.

En outre, afin de limiter les risques de dégradation de l'organe en matériau élastomère, l'organe en matériau élastomère peut ne pas être agencé dans la zone centrale dans laquelle est située la cage de la liaison à rotule. De la sorte l'organe en matériau élastomère est peu, voire non affecté par l'échauffement de la liaison à rotule ce qui permet de limiter les risques de dégradation de cet organe en matériau élastomère et d'améliorer sa durée de vie ainsi que son efficacité.

La zone centrale ne comportant pas de bloc de l'organe en matériau élastomère, l'amortisseur de traînée peut alors comporter des blocs de l'organe en matériau élastomère non adjacents situés uniquement dans les zones amont et aval.

De plus, la zone centrale ne comportant pas de bloc de l'organe en matériau élastomère, l'armature intérieure peut alors comporter dans cette zone centrale des ailettes agencées autour de la cage. Ces ailettes permettent d'une part de dissiper la chaleur générée au niveau de la liaison à rotule, et d'autre part de participer avantageusement à la tenue mécanique de l'armature intérieure. De plus, la suppression de l'organe en matériau élastomère dans cette zone centrale peut également permettre d'augmenter les dimensions de la liaison à rotule.

La présente invention a aussi pour objet une pale d'un rotor d'un aéronef à voilure tournante comportant un amortisseur de traînée précédemment décrit.

Cette pale comporte traditionnellement au moins un longeron et une peau. L'amortisseur de traînée est agencé au moins partiellement à l'intérieur de la pale à proximité d'une zone de l'emplanture de la pale. La pale est configurée pour être liée à un moyeu du rotor par exemple par une butée sphérique et par l'intermédiaire de l'amortisseur de traînée. Plus précisément, la liaison à rotule de l'amortisseur de traînée est liée à un axe de guidage solidaire d'un bras flexible du moyeu avec un degré de liberté en translation selon l'axe longitudinal de la pale.

Le longeron de la pale peut être formé par une branche inférieure et une branche supérieure au niveau de l'emplanture de la pale, les branches étant configurées pour être liées au moyeu par exemple par l'intermédiaire de la butée sphérique. L'amortisseur de traînée est agencé à l'intérieur de la pale entre les deux branches, l'armature extérieure de l'amortisseur de traînée étant solidarisée à la branche inférieure et à la branche supérieure de la pale. Cette armature extérieure est par exemple solidarisée à la branche inférieure et à la branche supérieure par l'intermédiaire de vis. De la sorte, la pale contribue également à lier entre elle les parois de l'armature extérieure, en particulier lorsque ces parois sont distinctes et non liées entre elles par une closions principale de l'armature extérieure.

En outre, l'amortisseur de traînée étant avantageusement agencé à l'intérieur de la pale, la peau peut former un carénage de la pale sensiblement jusqu'à son emplanture afin de minimiser la traînée aérodynamique de la pale et les perturbations aérodynamiques affectant la pale.

La commande de pas de la pale peut alors être fixée directement à la peau de la pale, qui est suffisamment rigide, au niveau de cette zone de l'emplanture pour transmettre la variation de pas à l'ensemble de la pale. De la sorte, aucune liaison mécanique, telle une bielle, avec par exemple le longeron de la pale susceptible de dégrader la traînée de la pale n'est nécessaire pour commander cette variation de pas.

De plus, la peau peut comporter des trappes agencées au niveau de l'amortisseur de traînée et permettant de dégager des ouvertures dans la peau. Ces ouvertures sont configurées pour permettre une vision de l'amortisseur de traînée. De la sorte, un contrôle visuel de l'amortisseur de traînée est possible sans aucun démontage lors des opérations de maintenance et permet ainsi un contrôle rapide et un gain de temps sur ces opérations de maintenance.

Enfin, chaque pale peut comporter un système d'équilibrage destiné à équilibrer le rotor. Ce système d'équilibrage consiste en l'ajout ou bien le retrait de petites masses telles que des rondelles métalliques, sur le rotor, en particulier au niveau de la pale. Ce système d'équilibrage est intégré à l'intérieur de chaque pale, tout en étant accessible sans démontage de la peau et/ou de la pale si ce n'est le démontage d'un simple obturateur. Ce système d'équilibrage est ainsi avantageusement protégé par la peau de la pale afin de minimiser la traînée aérodynamique de la pale et les perturbations aérodynamiques affectant la pale.

Selon une variante de l'invention, la pale comporte au moins un longeron, une peau et un manchon agencé au niveau de l'emplanture de la pale et comprenant une branche inférieure et une branche supérieure, les branches étant configurées pour être solidarisées d'une part au moyeu par exemple par l'intermédiaire de la butée sphérique, et d'autre part respectivement à au moins un longeron de la pale. L'amortisseur de traînée est agencé à l'intérieur du manchon, entre les deux branches, l'armature extérieure de l'amortisseur de traînée étant solidarisée à la branche inférieure et à la branche supérieure du manchon. Pour cette variante, la peau peut également former un carénage de la pale sensiblement jusqu'à son emplanture afin de minimiser la traînée aérodynamique de la pale.

La présente invention a aussi pour objet un rotor d'un aéronef à voilure tournante comportant la liaison articulée élastique précitée.

Un tel rotor comporte :
- un moyeu entraîné en rotation et comportant un corps central, au moins deux bras flexibles et un axe de guidage agencé à une extrémité de chaque bras flexible,
- au moins deux pales telles que précédemment décrites, chaque pale étant liée à un axe de guidage par l'intermédiaire de la liaison à rotule d'un amortisseur de traînée et
- une butée sphérique pour chaque pale reliant la pale au corps central.

La liaison à rotule de chaque amortisseur de traînée est de préférence liée à un axe de guidage avec un degré de liberté en translation selon un axe longitudinal de la pale, par exemple par une liaison à pivot glissant.

Selon un premier mode de réalisation, le moyeu est monobloc. Le corps central, chaque bras flexible et chaque axe de guidage forment ainsi un seul et même composant.

Le moyeu est par exemple réalisé en matériaux composites ou bien en titane.

Selon un second mode de réalisation, le moyeu comporte au moins deux composants distincts et solidarisés entre eux par au moins un dispositif de fixation. De la sorte, chaque composant peut être réalisé avec un matériau différent et adapté au comportement de ce composant. Par exemple, le corps central qui doit notamment résister aux forces centrifuges peut être réalisé en métal afin de limiter ses dimensions, notamment pour un aéronef de fort tonnage. De même, le bras flexible qui doit être flexible afin d'accompagner partiellement les mouvements angulaires de la pale est par exemple réalisé en matériaux composites ou bien en titane. Le bras flexible peut être solidarisé au corps central par des vis.

Enfin, l'axe de guidage peut être intégré au bras flexible ou bien être un axe de guidage métallique rapporté, réalisé par exemple en acier, et fixé par l'intermédiaire de vis au bras flexible.

L'invention et ses avantages apparaîtront avec plus de détails dans le cadre de la description qui suit avec des exemples de réalisation donnés à titre illustratif en référence aux figures annexées qui représentent :
- la figure 1, une vue d'ensemble d'un rotor d'un aéronef à voilure tournante,
- les figures 2 à 5, deux exemples de réalisation d'un amortisseur de traînée,
- les figures 6 et 7, une pale équipée d'un tel amortisseur de traînée,
- les figures 8 et 9, des vues de détail de ce rotor,
- la figure 10, une vue d'une pale et
- la figure 11, un moyeu de ce rotor.

Les éléments présents dans plusieurs figures distinctes sont affectés d'une seule et même référence.

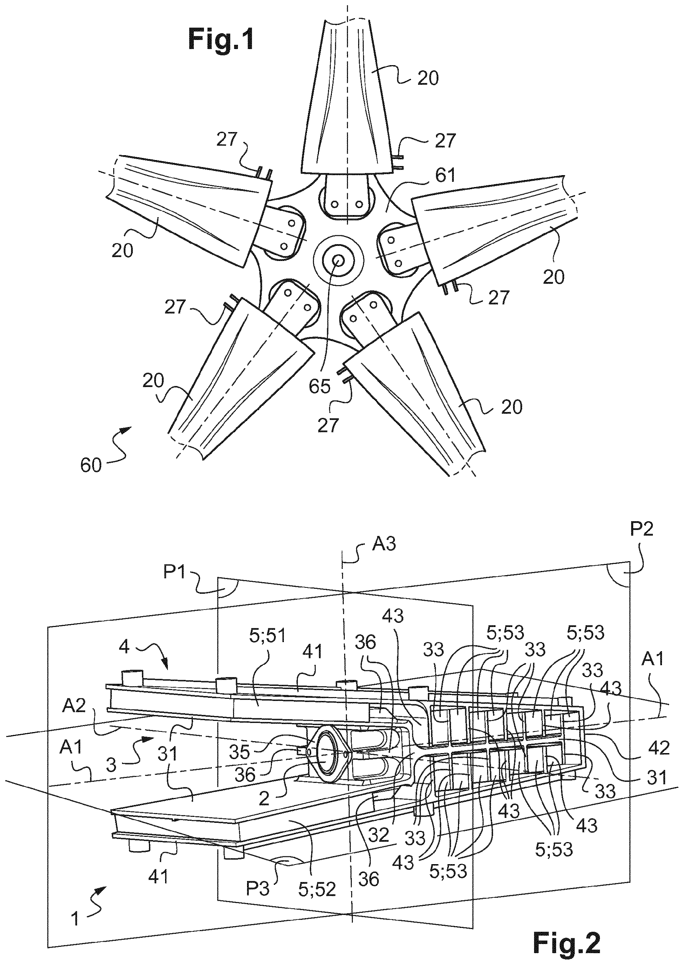

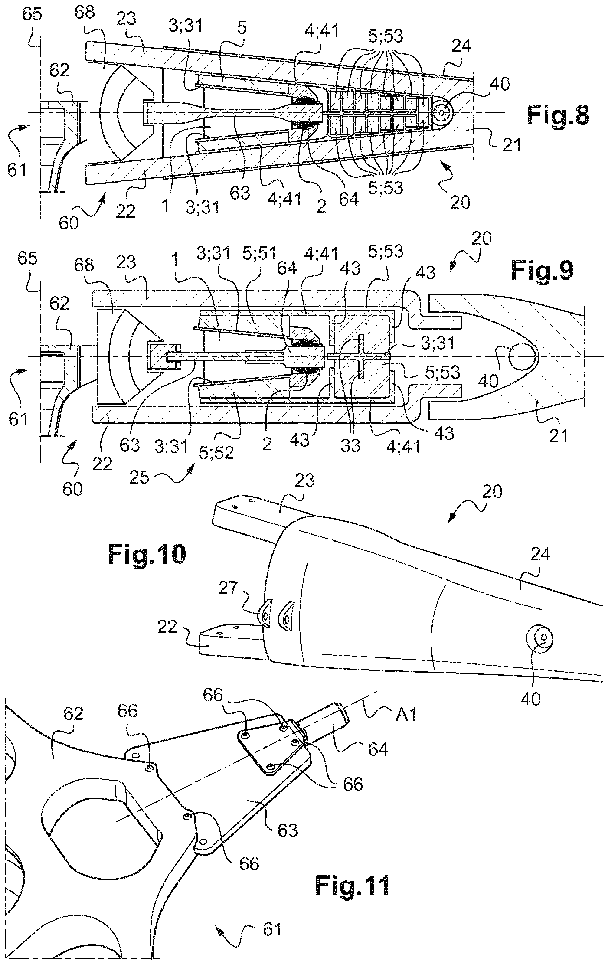

La figure 1 représente un rotor 60 d'un aéronef à voilure tournante. Ce rotor 60 comporte un moyeu 61 lié à cinq pales 20 et entraînant en rotation ces cinq pales 20 autour d'un axe de rotation 65 sensiblement vertical. Une vue de détail du moyeu 61 est représentée sur la figure 11, ce moyeu 61 comportant un corps central 62, des bras flexibles 63 et des axes de guidage 64. Des vues de détails du rotor 60 et en particulier de la liaison entre le moyeu 61 et la pale 20 sont représentées sur les figures 8 et 9.

Chaque pale 20 est liée au moyeu 61 par l'intermédiaire d'une butée sphérique lamifiée 68 dédiée à chaque pale 20 permettant à chaque pale 20 de débattre angulairement autour d'un axe de battement, d'un axe de traînée, et d'un axe de pas de la pale 20, cet axe de pas étant situé sensiblement longitudinalement selon l'envergure de la pale 20. Chaque pale 20 est également liée au moyeu 61 par l'intermédiaire d'un amortisseur de traînée 1.

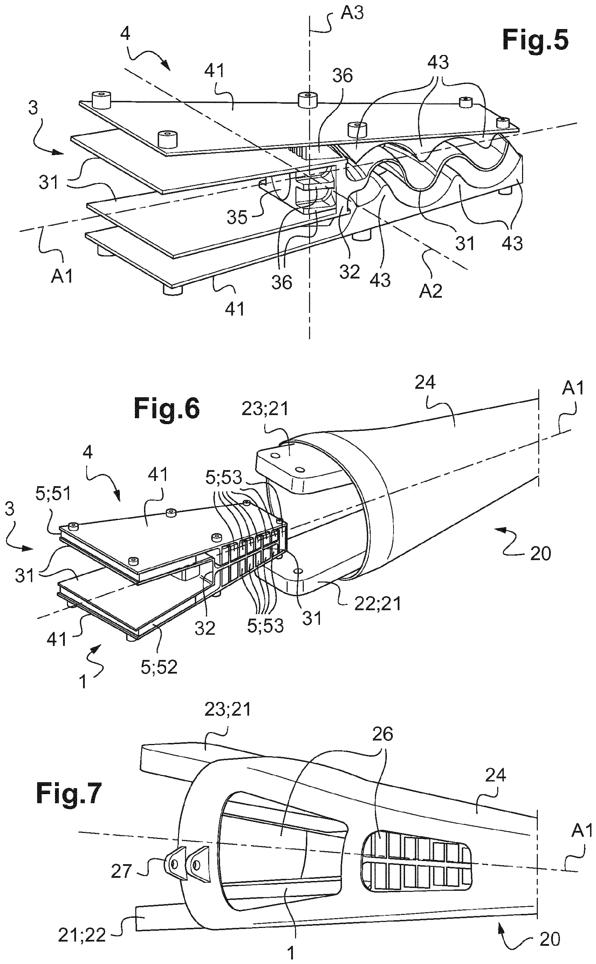

Des exemples de réalisation d'un amortisseur de traînée 1 sont représentés sur les figures 2 à 6 ainsi que sur les figures 7 à 10, l'amortisseur de traînée 1 étant alors agencé dans une pale 20. De façon commune, un amortisseur de traînée 1 comporte deux armatures 3,4, à savoir une armature intérieure 3 munie d'une cage 35 et une armature extérieure 4, une liaison à rotule 2 et un organe en matériau élastomère 5 agencé entre l'armature intérieure 3 et l'armature extérieure 4. La liaison à rotule 2 est logée dans la cage 35 et le centre de la cage 35 correspond au centre de rotation de la liaison à rotule 2.

Chaque amortisseur de traînée 1 comporte également un axe longitudinal A1, un axe transversal A2 et un axe vertical A3. L'axe longitudinal A1 de l'amortisseur de traînée 1 est sensiblement confondu avec l'axe longitudinal de la pale 20 dans laquelle est agencé l'amortisseur de traînée 1. L'axe transversal A2 est sensiblement perpendiculaire à l'axe longitudinal A1 et l'axe vertical A3 est perpendiculaire à l'axe longitudinal A1 et à l'axe transversal A2. Le point d'intersection de ces trois axes est le centre de la cage 35.

Un premier plan vertical P1 est formé par l'axe transversal A2 et l'axe vertical A3. Ce premier plan vertical P1 est donc perpendiculaire à l'axe longitudinal A1 et passe par le centre de la cage de l'armature intérieure 3. Un deuxième plan vertical P2 est formé par l'axe longitudinal A1 et l'axe vertical A3. Ce deuxième plan vertical P2 est perpendiculaire à l'axe transversal A2 et passe par le centre de la cage. Enfin, un troisième plan horizontal P3 est formé par l'axe longitudinal A1 et l'axe transversal A2. Ce troisième plan horizontal P3 est perpendiculaire à l'axe vertical A3 et passe par le centre de la cage 35.

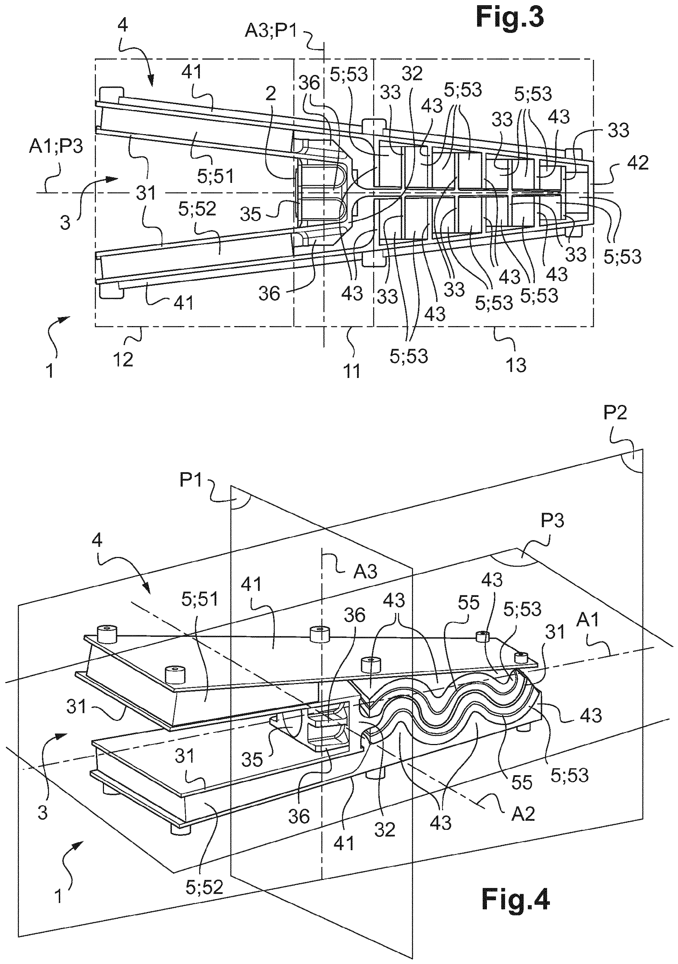

Une zone centrale 11, une zone amont 12 et une zone aval 13 sont attachées à la pale 20 conformément à la figure 3. La zone amont 12 est adjacente à la zone centrale 11 et située en amont de cette zone centrale 11 alors que la zone aval 13 est adjacente à la zone centrale 11 et située en aval de cette zone centrale 11. Les termes « amont » et « aval » s'entendent selon l'axe longitudinal A1 et selon le sens de l'envergure de la pale 20, de son emplanture vers son extrémité libre. On constate que les zones amont 12 et aval 13 ont une longueur selon l'axe longitudinal A1 nettement supérieure à la longueur de la zone centrale 11. La cage 35 est positionnée dans cette zone centrale 11.

L'armature intérieure 3 comporte trois parois 31 reliées entre elles par une cloison principale 32. Ces trois parois 31 sont parallèles à l'axe transversal A2. Une de ces parois 31 est située majoritairement dans la zone aval 13 et les deux autres parois 31 sont situées dans les zones amont 12 et centrale 11 La cloison principale 32 est parallèle au premier plan vertical P1 et est située dans la zone centrale 11.

L'armature extérieure 4 comporte deux parois 41 parallèles à l'axe transversal A2 et situées dans les trois zones centrale 11, amont 12 et aval 13. Ces deux parois 41 de l'armature extérieure 4 sont agencées à l'extérieur des parois 31 de l'armature intérieure 3.

Selon le premier exemple d'amortisseur de traînée 1 représenté sur les figures 2 à 3, les deux parois 31 de l'armature intérieure 3 situées dans les zones amont 12 et centrale 11 et les deux parois 41 de l'armature extérieure 4 sont inclinées vis-à-vis du troisième plan horizontal P3. Chacune de ces des deux parois 31 est respectivement parallèle à une des deux parois 41. La paroi 31 située majoritairement dans la zone aval 13 est quant à elle parallèle au troisième plan horizontal P3. De plus, l'armature extérieure 4 comporte une cloison principale 42 reliant entre elles les deux parois 41. Cette cloison principale 42 est parallèle au premier plan vertical P1 et est située dans la zone aval 13, à l'extrémité des deux parois 41.

L'armature intérieure 3 et l'armature extérieure 4 comportent également des closions secondaires 33,43 perpendiculaires à l'axe longitudinal A1, donc parallèles au premier plan vertical P1, et situées dans la zone aval 13. Ces closions secondaires 33,43 sont agencées de telle sorte qu'une cloison secondaire 33 de l'armature intérieure 3 est située entre une cloison secondaire 43 et la cloison principale 42 de l'armature extérieure 4 et les autres cloisons secondaires 33 de l'armature intérieure 3 sont situées entre deux cloisons secondaires 43 de l'armature extérieure 4.

L'organe en matériau élastomère 5 comporte plusieurs blocs 51,52,53 en matériau élastomère agencés dans les zones amont 12 et aval 13. Dans la zone amont 12, deux blocs 51,52 distincts sont agencés respectivement entre une paroi 31 de l'armature intérieure 3 et une paroi 41 de l'armature extérieure 4. Ces blocs 51,52 sont solidaires de chaque paroi 31,41, par exemple collés et d'épaisseur constante. Dans la zone aval 13, plusieurs blocs 53 sont agencés respectivement entre une cloison secondaire 33 de l'armature intérieure 3 et une cloison secondaire 43 de l'armature extérieure 4. Un dernier bloc 53 est agencé entre une cloison secondaire 33 de l'armature intérieure 3 et la cloison principale 42 de l'armature extérieure 4. Tous ces blocs 53 sont également agencés entre une paroi 31 de l'armature intérieure 3 et une paroi 41 de l'armature extérieure 4. Ces blocs 53 sont solidaires d'une cloison principale 32,42 ou secondaire 33,43 de chaque armature 3,4, par exemple collés.

Selon ce premier exemple de réalisation d'un amortisseur de traînée 1 représenté sur les figures 2 et 3, chaque bloc 53 n'est pas en contact avec les parois 31,41 des deux armatures 3,4. Toutefois, chaque bloc 53 pourrait également être en contact et solidaire avec ces parois 31,41 des deux armatures 3,4.

Par contre, aucun bloc de l'organe en matériau élastomère 5 n'est agencé dans la zone centrale 11. L'armature intérieure 3 comporte des ailettes 36 agencées dans cette zone centrale 11 et à proximité et autour de la cage 35. Ces ailettes 36, visibles sur la figure 3, permettent de dissiper de la chaleur générée au niveau de la liaison à rotule 2 lors des mouvements angulaires de la pale 20 et d'augmenter la tenue mécanique de l'armature intérieure 3.

Selon ce premier exemple de réalisation, la cage 35 est rapportée sur l'armature intérieure 3 dans la zone centrale 11 et est solidaire de l'armature intérieure 3 comme représenté sur les figures 2 et 3.

Sur l'exemple de réalisation d'un amortisseur de traînée 1 représenté sur les figures 4 et 5, qui ne fait pas partie de l'invention, mais qui pourrait être utile pour la comprendre, la cage 35 est intégrée à l'armature intérieure 3 et la liaison à rotule 2 n'est pas représentée. Les deux parois 31 de l'armature intérieure 3 situées dans les zones amont 12 et centrale 11 et les deux parois 41 de l'armature extérieure 4 sont inclinées vis-à-vis du troisième plan horizontal P3, mais elles ne sont pas parallèles entre elles. En conséquence, l'épaisseur des blocs 51,52 de l'organe en matériau élastomère 5 agencés entre ces parois 31,41 dans la zone amont 12 diminue selon l'axe longitudinal A1 de l'amont vers l'aval.

La paroi 31 située majoritairement dans la zone aval 13 a une forme ondulée, par exemple une forme de sinusoïde selon l'axe longitudinal A1 comme représenté sur les figures 4 et 5. De plus, cette paroi 31 de forme ondulée a également une forme circulaire autour d'un axe sensiblement parallèle à l'axe vertical A3 comme cela est visible sur la figure 5 dans laquelle l'organe en matériau en élastomère 5 a été retiré. Cet axe sensiblement parallèle à l'axe vertical A3 passe par le point focal de la butée sphérique 68 lorsque l'amortisseur de traînée 1 est agencé dans une pale 20.

De plus, l'armature extérieure 4 comporte des closions secondaires 43 solidaires de chaque paroi 41. Ces closions secondaires 43 sont complémentaires de la paroi 31 de sorte que l'organe en matériau en élastomère 5 agencé entre cette paroi 31 de forme ondulée et l'armature extérieure 4 comporte dans la zone aval 13 deux blocs 53 avec une épaisseur constante. De plus, ces deux blocs 53 comportent un insert 55 noyé dans chaque bloc 53 en matériau élastomère permettant d'augmenter la raideur de ces deux blocs 53 en matériau élastomère. En outre, les deux parois 41 de l'armature extérieure 4 sont distinctes et liées entre elles par l'intermédiaire de l'organe en matériau élastomère 5 et de l'armature intérieure 3.

Enfin, selon le troisième exemple de réalisation d'un amortisseur de traînée 1 représenté sur la figure 9, l'amortisseur de traînée 1 est agencé à l'intérieur d'une pale 20, et plus précisément à l'intérieur d'un manchon 25 que comporte cette pale 20. Les deux parois 31 de l'armature intérieure 3 situées dans les zones amont 12 et centrale 11 sont inclinées vis-à-vis du troisième plan horizontal P3 alors que les deux parois 41 de l'armature extérieure 4 sont parallèles à ce troisième plan horizontal P3. En conséquence, les parois 31,41 de chaque armature 3,4 ne sont pas parallèles entre elles et l'épaisseur des blocs 51,52 de l'organe en matériau élastomère 5 agencés entre ces parois 31,41 dans la zone amont 12 augmente selon l'axe longitudinal A1 de l'amont vers l'aval.

La paroi 31 de l'armature intérieure 3 située majoritairement dans la zone aval 13 est parallèle au troisième plan horizontal P3 et donc parallèle aux deux parois 41 de l'armature extérieure 4. Chaque paroi 41 de l'armature extérieure 4 comporte deux closions secondaires 43 et l'armature intérieure 3 comporte deux cloisons secondaires 33 solidaires de la paroi 31 située majoritairement dans la zone aval 13.

De la sorte, dans la zone amont 12, deux blocs 51,52 distincts sont agencés respectivement entre une paroi 31 de l'armature intérieure 3 et une paroi 41 de l'armature extérieure 4. Ces blocs 51,52 sont solidaires de chaque paroi 31,41. Dans la zone aval 13, deux blocs 53 sont agencés respectivement entre une paroi 31 de l'armature intérieure 3 et une paroi 41 de l'armature extérieure 4 et entre les deux cloisons secondaires 43 de l'armature extérieure 4. Ces blocs 53 sont solidaires de chaque paroi 31,41 et des cloisons secondaires 33,43 de chaque armature 3,4. Chaque bloc 53 comporte une fente dans laquelle est positionnée une cloison secondaire 33 de l'armature intérieure 3.

Cet amortisseur de traînée 1 est agencé à l'intérieur d'une pale 20, comme représenté sur les figures 6 à 8 et sur la figure 10.

La pale 20 comporte un longeron 21 et une peau 24. Le longeron 21 comporte une branche inférieure 22 et une branche supérieure 23 dans la zone de l'emplanture de la pale 20. La branche inférieure 22 et la branche supérieure 23 forment ainsi une forme de fourche à l'intérieur de laquelle est agencé l'amortisseur de traînée 1. L'armature extérieure 4 est solidarisée respectivement à la branche inférieure 22 et à la branche supérieure 23, par exemple par des vis.

La pale 20 est liée au moyeu 61 du rotor 60 par une butée sphérique lamifiée 68 et par l'intermédiaire de l'amortisseur de traînée 1. Plus précisément, les branches inférieure 22 et supérieure 23 du longeron 21 permettent de lier la pale 20 au moyeu 61 par l'intermédiaire de la butée sphérique 68. De plus, la liaison à rotule 2 de l'amortisseur de traînée 1 est liée à un axe de guidage 64 solidaire d'un bras flexible 63 du moyeu 61. La liaison à rotule 2 est liée à l'axe de guidage 64 par l'intermédiaire d'une liaison à pivot glissant.

Une fois l'amortisseur de traînée 1 agencé dans la pale 20, l'axe longitudinal A1 de l'amortisseur de traînée 1 est sensiblement confondu avec l'axe longitudinal de la pale 20. L'axe transversal A2 s'étend transversalement d'un bord d'attaque vers un bord de fuite de la pale 20.

L'amortisseur de traînée 1 permet ainsi d'amortir les mouvements de la pale 20 situés principalement dans un plan perpendiculaire à l'axe de rotation du moyeu 61 du rotor 60, autour de son axe de traînée. En effet, de tels mouvements génèrent des déplacements relatifs des deux armatures 3,4 et des déformations de l'organe en matériau élastomère 5 provoquant l'apparition d'efforts induits sensiblement parallèles à l'axe transversal A2. Avantageusement, les parois 31,41 sont agencées parallèlement à cet axe transversal A2. En conséquence, chaque bloc 51,52,53 de l'organe en matériau élastomère 5 est sollicité principalement en cisaillement par ces déplacements relatifs des deux armatures 3,4 et peut ainsi amortir les mouvements de la pale 20.

En outre, la répartition des blocs 51,52,53 de l'organe en matériau élastomère 5 de part et d'autre de la cage 35, est configurée afin que des efforts induits par les déformations de l'organe en matériau élastomère 5 consécutifs à ces mouvements relatifs des deux armatures 3,4 soient répartis de façon uniforme de part et d'autre de la cage 35 au moins vis-à-vis du premier plan vertical P1 passant par le centre de la cage 35. De la sorte, les efforts induits par les déformations des blocs 51,52,53 de l'organe en matériau élastomère 5 consécutives aux mouvements relatifs des deux armatures 3,4 provoqués par des mouvements de la pale 20 sont orientés principalement parallèlement à l'axe transversal A2 et répartis de façon sensiblement uniforme et équilibrée de part et d'autre de la cage 35 vis-à-vis de ce premier plan vertical P1. L'amortisseur de traînée 1 permet ainsi de limiter, voire d'éviter l'apparition d'efforts parasites additionnels au sein de la pale 20, et principalement au niveau de la butée sphérique lamifiée 68, lors de tels mouvements de la pale 20 permettant ainsi d'assurer la stabilité de l'aéronef à voilure tournante et de prévenir les phénomènes éventuels de résonance sol et de résonance air.

De préférence, cette répartition des blocs 51,52,53 de part et d'autre de la cage 35, est telle que le barycentre des efforts induits par les déformations de l'organe en matériau élastomère 5 consécutives aux mouvements relatifs des deux armatures 3,4 soit situé au centre de la cage 35.

Selon une variante de pale représentée sur la figure 9, la pale 20 comporte un manchon 25 agencé au niveau d'une zone de l'emplanture de la pale 20. Le manchon 25 comporte une branche inférieure 22 et une branche supérieure 23 permettant de solidarisées la pale 20 au moyeu 61. Ces branches inférieure 22 et supérieure 23 sont parallèles l'une à l'autre et liées d'une part au moyeu 61 par l'intermédiaire de la butée sphérique lamifiée 68 et d'autre part au longeron 21. L'amortisseur de traînée 1 est agencé à l'intérieur du manchon 25 entre la branche inférieure 22 et la branche supérieure 23, l'armature extérieure 4 étant solidarisée aux branches inférieure 22 et supérieure 23 du manchon 25.

Le comportement de l'amortisseur de traînée 1 agencé dans cette variante de la pale 20 est sensiblement identique à celui d'un amortisseur de traînée 1 agencé dans une pale 20 sans manchon 25 et permet ainsi de limiter voire supprimer l'apparition d'efforts parasites dans la pale 20 et en particulier dans la butée sphérique lamifiée 68.

La surface extérieure de la peau 24 constitue majoritairement une succession continue de profils aérodynamiques. La peau 24 se prolonge jusqu'à la zone de l'emplanture de la pale 20 afin de réaliser un carénage de la pale 20 jusqu'à cette emplanture. La traînée aérodynamique de la pale 20 se trouve ainsi réduite, de même que les perturbations aérodynamiques affectant la pale 20. Une commande de pas 27 est fixée directement à la peau 24 de la pale 20 à proximité de l'emplanture de la pale 20.

De plus, la peau 24 comporte des ouvertures 26 visibles sur la figure 7 permettant un contrôle visuelle de l'amortisseur de traînée 1 sans aucun démontage de la pale 20. Lors de l'utilisation de la pale 20, des trappes non représentées permettent d'obstruer ces ouvertures 26 afin de ne pas dégrader les performances aérodynamiques de la pale 20.

La pale 20 comporte également un système d'équilibrage 40 destiné à équilibrer le rotor 60. Ce système d'équilibrage 40 est intégré à l'intérieur de chaque pale 20 et comporte un obturateur non représenté afin de minimiser la traînée aérodynamique de la pale 20 et les perturbations aérodynamiques que pourrait générer un système d'équilibrage positionné à l'extérieur de la pale 20.

On notera par ailleurs que le moyeu 61 du rotor 60 peut être monobloc comme représenté sur la figure 8. On constate en effet que l'épaisseur du bras flexible 63 varie le long de la direction longitudinale de la pale 20 afin de permettre une certaine flexion de ce bras flexible 63 tout en conservant une rigidité suffisante au niveau du corps central 62. Un tel moyeu 61 monobloc est par exemple réalisé en titane.

Ce moyeu 61 peut également être constitué par des composants distincts et solidarisés entre eux par au moins un dispositif de fixation, comme représenté sur les figures 9 et 11. Le bras flexible 63 est ainsi fixé au corps central 62 par des vis 66 et l'axe de guidage 64 est fixé au bras flexible 63 également par des vis 66. Chaque composant peut ainsi être réalisé dans le matériau le plus adapté, Par exemple du titane ou de l'acier pour le corps central 62, des matériaux composites ou du titane pour les bras flexibles 63 et de l'acier ou du titane pour l'axe de guidage 64.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est définie par les revendications annexées.

Par exemple, l'utilisation de l'amortisseur de traînée 1 n'est pas limitée à un rotor 60 muni de cinq pales 20, mais est également possible avec un rotor 60 comportant un nombre quelconque de pales 20 supérieur ou égal à deux. De même, les parois 31,41 des deux armatures 3,4 de l'amortisseur de traînée 1 ne sont pas limitées à des surfaces inclinées vis-à-vis du troisième plan horizontal P3. Ces parois 31,41 peuvent également être parallèles à ce troisième plan horizontal P3 lorsque la forme de la pale 20 dans laquelle est agencé l'amortisseur de traînée 1 le permet.

## Revendications

1. Amortisseur de traînée (1) destiné à une pale (20) d'un rotor (60) d'un aéronef à voilure tournante, ledit rotor (60) étant muni d'un moyeu (61) entraîné en rotation, ledit amortisseur de traînée (1) comportant :
- un axe longitudinal (A1), destiné à être confondu avec l'axe longitudinal de ladite pale (20),
- une liaison à rotule (2), destinée à être reliée audit moyeu (61),
- deux armatures (3,4), une desdites deux armatures (3,4) étant dénommée « armature intérieure » (3) et munie d'une cage (35) dans laquelle est agencée ladite liaison à rotule (2), l'autre desdites deux armatures (3,4) étant dénommée « armature extérieure » (4) et destinée à être solidarisée à ladite pale (20), et
- un organe en matériau élastomère (5) agencé entre ladite armature intérieure (3) et ladite armature extérieure (4),
lesdites deux armatures (3,4) et ledit organe en matériau élastomère (5) étant agencés de part et d'autre de ladite cage (35), ladite armature intérieure (3) et ladite armature extérieure (4) comportant respectivement au moins deux parois (31,41) et au moins une cloison secondaire (33,43) en contact avec ledit organe en matériau élastomère (5) et configurée de sorte à augmenter les surfaces de contact entre ledit organe en matériau élastomère (5) et lesdites deux armatures (3,4), ladite armature intérieure (3) comportant au moins une cloison principale (32) reliant entre elles au moins deux parois (31) de ladite armature intérieure (3), lesdites cloisons secondaires (33,43) séparant ledit organe en matériau élastomère (5) en plusieurs blocs (53) distincts en matériau élastomère, lesdits blocs (53) étant situés entre deux cloisons secondaires (33,43) ou bien entre une cloison principale (32) et une cloison secondaire (33,43) afin que des mouvements relatifs entre lesdites deux armatures (3,4) consécutifs à des mouvements de ladite pale (20) soient amortis par des déformations dudit organe en matériau élastomère (5), ledit amortisseur de traînée (1) étant destiné à être agencé au moins partiellement à l'intérieur de ladite pale (20).
**caractérisé en ce que** lesdites deux armatures (3,4) et ledit organe en matériau élastomère (5) s'étendent, au moins selon ledit axe longitudinal (A1), de part et d'autre de ladite cage (35) au-delà d'une zone centrale (11) dans laquelle est située ladite cage (35), ladite zone centrale (11) couvrant longitudinalement au moins une longueur égale à la longueur de ladite cage (35).

2. Amortisseur de traînée (1) selon la revendication 1, **caractérisé en ce que** ledit amortisseur de traînée (1) comporte, selon ledit axe longitudinal (A1), une zone amont (12) située en amont de ladite zone centrale (11) et une zone aval (13) située en aval de ladite zone centrale (11), lesdites deux armatures (3,4) couvrant lesdites zones amont (12), centrale (11) et aval (13) et ledit organe en matériau élastomère (5) couvrant au moins lesdites zones amont (12) et aval (13).

3. Amortisseur de traînée (1) selon l'une quelconque des revendications 1 à 2,
**caractérisé en ce que** ladite armature extérieure (4) comporte au moins une cloison principale (42) reliant entre elles au moins deux parois (41) de ladite armature extérieure (4), lesdits blocs (53) dudit organe en matériau élastomère (5) étant situés entre deux cloisons secondaires (33,43) ou bien entre une cloison principale (32,42) et une cloison secondaire (33,43).

4. Amortisseur de traînée (1) selon l'une quelconque des revendications 1 à 3,
**caractérisé en ce que** lesdites parois (41) de ladite armature extérieure (4) sont reliées entre elles par l'intermédiaire de ladite armature intérieure (3) et dudit organe en matériau élastomère (5).

5. Amortisseur de traînée (1) selon l'une quelconque des revendications 1 à 4,
**caractérisé en ce que** ledit organe en matériau élastomère (5) comporte au moins deux blocs (51,52,53) distincts en matériau élastomère, chaque bloc (51,52,53) adhérant à au moins une paroi (31) ou bien une cloison (32,33) de ladite armature intérieure (3) et à au moins une paroi (41) ou bien une cloison (42,43) de ladite armature extérieure (4).

6. Amortisseur de traînée (1) selon l'une quelconque des revendications 1 à 5,
**caractérisé en ce qu'**au moins un bloc (51,52,53) dudit organe en matériau élastomère (5) est agencé entre ladite armature intérieure (3) et ladite armature extérieure (4) de sorte qu'une section dudit bloc (51,52,53) est constante.

7. Amortisseur de traînée (1) selon l'une quelconque des revendications 1 à 5,
**caractérisé en ce qu'**au moins un bloc (51,52,53) dudit organe en matériau élastomère (5) est agencé entre ladite armature intérieure (3) et ladite armature extérieure (4) de sorte qu'une section dudit bloc (51,52,53) varie afin que ledit bloc (51,52,53) soit sollicitée de façon homogène lors desdits mouvements relatifs entre ladite armature intérieure (3) et ladite armature extérieure (4).

8. Amortisseur de traînée (1) selon l'une quelconque des revendications 1 à 7,
**caractérisé en ce qu'**au moins un bloc (51,52,53) dudit organe en matériau élastomère (5) comporte un insert noyé dans ledit bloc (51,52,53) de sorte à améliorer la raideur dudit bloc (51,52,53).

9. Amortisseur de traînée (1) selon l'une quelconque des revendications 1 à 8,
**caractérisé en ce que** lesdites deux armatures (3,4) comporte au moins une paroi (31,41) et/ou au moins une cloison (32,33,42,43) parallèle(s) à un axe transversal (A2) dudit amortisseur de traînée (1), ledit axe transversal (A2) étant perpendiculaire audit axe longitudinal (A1).

10. Amortisseur de traînée (1) selon l'une quelconque des revendications 1 à 9,
**caractérisé en ce que** lesdites deux armatures (3,4) comporte au moins une paroi (31,41) et/ou au moins une cloison (32,33,42,43) constituées par des formes non planes.

11. Amortisseur de traînée (1) selon l'une quelconque des revendications 1 à 10,
**caractérisé en ce que** la répartition dudit organe en matériau élastomère (5) de part et d'autre de ladite cage (35), ladite cage (35) comportant un centre correspondant au centre de rotation de ladite liaison à rotule (2), est configurée afin que des efforts induits par lesdites déformations dudit organe en matériau élastomère (5) consécutives auxdits mouvements relatifs desdites deux armatures (3,4) soient répartis de façon uniforme de part et d'autre de la cage (35) au moins vis-à-vis d'un premier plan vertical (P1) perpendiculaire audit axe longitudinal (A1) passant par ledit centre de la cage (35).

12. Amortisseur de traînée (1) selon l'une quelconque des revendications 1 à 11,
**caractérisé en ce que** la répartition dudit organe en matériau élastomère (5) de part et d'autre de ladite cage (35), ladite cage (35) comportant un centre correspondant au centre de rotation de ladite liaison à rotule (2), est configurée afin que le barycentre des efforts induits par lesdites déformations dudit organe en matériau élastomère (5) consécutives auxdits mouvements relatifs desdites deux armatures (3,4) soit situé audit centre de ladite cage (35) de sorte que lesdits efforts induits par lesdites déformations dudit organe en matériau élastomère (5) soient répartis de façon uniforme et équilibrée de part et d'autre de la cage (35) vis-à-vis d'un premier plan vertical (P1) perpendiculaire audit axe longitudinal (A1) passant par ledit centre de la cage (35), vis-à-vis d'un deuxième plan vertical (P2) perpendiculaire à un axe transversal (A2) dudit amortisseur de traînée (1) et passant par ledit centre de ladite cage (35) et vis-à-vis d'un troisième plan horizontal (P3) perpendiculaire à un axe vertical (A3) dudit amortisseur de traînée (1) et passant par le centre de ladite cage (35), ledit axe transversal (A2) étant perpendiculaire audit axe longitudinal (A1) et ledit axe vertical (A3) étant perpendiculaire audit axe transversal (A2) et audit axe longitudinal (A1).

13. Amortisseur de traînée (1) selon l'une quelconque des revendications 1 à 12,
**caractérisé en ce que** ledit organe en matériau élastomère (5) n'est pas agencé dans ladite zone centrale (11).

14. Amortisseur de traînée (1) selon la revendication 13, **caractérisé en ce que** ladite armature intérieure (3) comporte des ailettes (36) agencées dans ladite zone centrale (11) de sorte à permettre de dissiper de la chaleur générée au niveau de ladite liaison à rotule (2).

15. Pale (20) comportant une peau (24) et au moins un longeron (21), configurée pour être liée à un moyeu (61) d'un rotor (60) d'un aéronef,
**caractérisée en ce que** ladite pale (20) comporte un amortisseur de traînée (1) selon l'une quelconque des revendications 1 à 14 et agencé au moins partiellement à l'intérieur de ladite pale (20).

16. Pale (20) selon la revendication 15,
**caractérisée en ce que** ledit longeron (21) comporte une branche inférieure (22) et une branche supérieure (23) au niveau d'une zone de l'emplanture de ladite pale (20), lesdites branches inférieure (22) et supérieure (23) étant configurées pour être liées audit moyeu (31), ledit amortisseur de traînée (1) étant agencé à l'intérieur de ladite pale (20) entre ladite branche inférieure (22) et ladite branche supérieure (23), ladite armature extérieure (4) dudit amortisseur de traînée (1) étant solidarisée à ladite branche inférieure (22) et à ladite branche supérieure (23).

17. Pale (20) selon la revendication 15,
**caractérisée en ce que** ladite pale (20) comporte un manchon (25) agencé au niveau d'une zone de l'emplanture de ladite pale (20), ledit manchon (25) comprenant une branche inférieure (22) et une branche supérieure (23), lesdites branches inférieure (22) et supérieure (23) étant configurées pour être solidarisées d'une part audit moyeu (31), et d'autre part à un longeron (21) de ladite pale (20), ledit amortisseur de traînée (1) étant agencé à l'intérieur dudit manchon (25) entre ladite branche inférieure (22) et ladite branche supérieure (23), ladite armature extérieure (4) dudit amortisseur de traînée (1) étant solidarisée auxdites branches inférieure (22) et supérieure (23) dudit manchon (25).

18. Pale (20) selon l'une quelconque des revendications 15 à 17,
**caractérisée en ce que** ladite peau (24) réalise un carénage de ladite pale (20) jusqu'à son emplanture afin de minimiser la traînée aérodynamique de ladite pale (20) et comporte des ouvertures (26,27) configurées pour permettre une vision dudit amortisseur de traînée (1).

19. Pale (20) selon l'une quelconque des revendications 15 à 18,
**caractérisée en ce que** ladite pale (20) comporte un système d'équilibrage destiné à équilibrer ledit rotor (60) et qui est intégré à l'intérieur de ladite pale (20) afin de minimiser la traînée aérodynamique de ladite pale (20) et les perturbations aérodynamiques affectant ladite pale (20).

20. Rotor (60) d'aéronef à voilure tournante comportant :
- un moyeu (61) entraîné en rotation autour d'un axe de rotation (65) et comportant un corps central (62), au moins deux bras flexibles (63) et un axe de guidage (64) pour chaque bras flexible (63),
- au moins deux pales (20) muni d'un amortisseur de traînée (1), une liaison à rotule (14) dudit amortisseur de traînée (1) de chaque pale (20) étant lié à un axe de guidage (64) dudit rotor (60) et
- une butée sphérique (68) pour chaque pale (20) reliant ladite pale (20) audit moyeu (61),
**caractérisé en ce que** chaque pale (20) est selon l'une quelconque des revendications 15 à 19.

21. Rotor (60) selon la revendication 20,
**caractérisé en ce que** ledit moyeu (61) comporte au moins deux composants (62,63,64) distincts et solidarisés entre eux par au moins un dispositif de fixation (66), ledit corps central (62) étant distinct desdits bras flexibles (63).

## Patentansprüche

1. Schwenkdämpfer (1) für ein Blatt (20) eines Rotors (60) eines Drehflügelluftfahrzeugs, wobei der Rotor (60) eine drehangetriebene Nabe (61) aufweist und der Schwenkdämpfer (1) umfasst:
- eine Längsachse (A1), die vorgesehen ist, um mit der Längsachse des Blattes (20) zusammenzufallen,
- ein Kugelgelenk (2), das vorgesehen ist, um mit der Nabe (61) verbunden zu werden,
- zwei Verstärkungen (3, 4), wobei eine der beiden Verstärkungen (3, 4), als "innere Verstärkung" (3) bezeichnet, mit einem Käfig (35) versehen ist, in dem das Kugelgelenk (2) angeordnet ist, und die andere der beiden Verstärkungen (3, 4), als "äußere Verstärkung" (4) bezeichnet, vorgesehen ist, um mit dem Blatt (20) fest verbunden zu werden, und
- ein Element (5) aus Elastomermaterial, das zwischen der inneren Verstärkung (3) und der äußeren Verstärkung (4) angeordnet ist,
wobei die beiden Verstärkungen (3, 4) und das Element aus Elastomermaterial (5) auf verschiedenen Seiten des Käfigs (35) angeordnet sind,
die innere Verstärkung (3) und die äußere Verstärkung (4) jeweils mindestens zwei Wände (31, 41) und mindestens eine sekundäre Trennwand (33, 43) in Kontakt mit dem Element aus Elastomermaterial (5) umfassen und so konfiguriert sind, dass sie die Kontaktflächen zwischen dem Element aus Elastomermaterial (5) und den beiden Verstärkungen (3, 4) vergrößern, wobei die innere Verstärkung (3) mindestens eine Haupttrennwand (32) umfasst, die mindestens zwei Wände (31) der inneren Verstärkung (3) miteinander verbindet,
wobei die sekundären Trennwände (33, 43) das Element aus Elastomermaterial (5) in mehrere verschiedene Blöcke (53) aus Elastomermaterial aufteilen, wobei die Blöcke (53) zwischen zwei sekundären Trennwänden (33, 43) oder zwischen einer Haupttrennwand (32) und einer sekundären Trennwand (33, 43) angeordnet sind, so dass relative Bewegungen zwischen den beiden Verstärkungen (3, 4) nach Bewegungen des Blattes (20) durch Verformungen des Elements aus Elastomermaterial (5) gedämpft werden,
wobei der Schwenkdämpfer (1) vorgesehen ist, um zumindest teilweise innerhalb des Blattes (20) angeordnet zu werden,
**dadurch gekennzeichnet, dass** sich die beiden Verstärkungen (3, 4) und das Element aus Elastomermaterial (5) sich zumindest entlang der Längsachse (A1) auf beiden Seiten des Käfigs (35) über eine zentrale Zone (11) hinaus erstrecken, in der sich der Käfig (35) befindet, wobei die zentrale Zone (11) in Längsrichtung mindestens eine Länge bedeckt, die der Länge des Käfigs (35) entspricht.

2. Schwenkdämpfer (1) nach Anspruch 1,
**dadurch gekennzeichnet, dass** der Schwenkdämpfer (1) entlang der Längsachse (A1) eine stromaufwärts gelegene Zone (12) stromaufwärts der zentralen Zone (11) und eine stromabwärts gelegene Zone (13) stromabwärts der zentralen Zone (11) aufweist, wobei die beiden Verstärkungen (3, 4) die stromaufwärts (12), zentral (11) und stromabwärts (13) liegenden Zonen abdecken und das Element aus Elastomermaterial (5) mindestens die stromaufwärts (12) und stromabwärts (13) liegenden Zonen abdeckt.

3. Schwenkdämpfer (1) nach einem der Ansprüche 1 bis 2,
**dadurch gekennzeichnet, dass** die äußere Verstärkung (4) mindestens eine Haupttrennwand (42) umfasst, die mindestens zwei Wände (41) der äußeren Verstärkung (4) miteinander verbindet, wobei die Blöcke (53) des Elements aus Elastomermaterial (5) zwischen zwei sekundären Trennwänden (33, 43) oder zwischen einer Haupttrennwand (32, 42) und einer sekundären Trennwand (33, 43) angeordnet sind.

4. Schwenkdämpfer (1) nach einem der Ansprüche 1 bis 3,
**dadurch gekennzeichnet, dass** die Wände (41) der äußeren Verstärkung (4) über die innere Verstärkung (3) und das Element aus elastomerem Material (5) miteinander verbunden sind.

5. Schwenkdämpfer (1) nach einem der Ansprüche 1 bis 4,
**dadurch gekennzeichnet, dass** das Element aus Elastomermaterial (5) mindestens zwei verschiedene Blöcke (51, 52, 53) aus Elastomermaterial aufweist, wobei jeder Block (51, 52, 53) an mindestens einer Wand (31) oder Trennwand (32, 33) der inneren Verstärkung (3) und an mindestens einer Wand (41) oder Trennwand (42, 43) der äußeren Verstärkung (4) haftet.

6. Schwenkdämpfer (1) nach einem der Ansprüche 1 bis 5,
**dadurch gekennzeichnet, dass** mindestens ein Block (51, 52, 53) des Elements aus Elastomermaterial (5) zwischen der inneren Verstärkung (13) und der äußeren Verstärkung (4) so angeordnet ist, dass ein Querschnitt des Blocks (51 ,52, 53) konstant ist.

7. Schwenkdämpfer (1) nach einem der Ansprüche 1 bis 5,
**dadurch gekennzeichnet, dass** mindestens ein Block (51, 52, 53) des Elements aus Elastomermaterial (5) zwischen der inneren Verstärkung (3) und der äußeren Verstärkung (4) so angeordnet ist, dass sich ein Querschnitt des Blocks (51, 52, 53) so ändert, dass der Block (51, 52, 53) während der Relativbewegungen zwischen der inneren Verstärkung (3) und der äußeren Verstärkung (4) gleichmäßig belastet wird.

8. Schwenkdämpfer (1) nach einem der Ansprüche 1 bis 7,
**dadurch gekennzeichnet, dass** mindestens ein Block (51, 52, 53) des Elements aus Elastomermaterial (5) einen in den Block (51 ,52, 53) eingebetteten Einsatz aufweist, um die Steifigkeit des Blocks (51, 52, 53) zu verbessern.

9. Schwenkdämpfer (1) nach einem der Ansprüche 1 bis 8,
**dadurch gekennzeichnet, dass** die beiden Verstärkungen (3, 4) mindestens eine Wand (31, 41) und/oder mindestens eine Trennwand (32, 33, 42, 43) parallel zu einer Querachse (A2) des Schwenkdämpfers (1) aufweisen, wobei die Querachse (A2) senkrecht zu der Längsachse (A1) steht.

10. Schwenkdämpfer (1) nach einem der Ansprüche 1 bis 9,
**dadurch gekennzeichnet, dass** die beiden Verstärkungen (3, 4) mindestens eine Wand (31, 41) und/oder mindestens eine Trennwand (32, 33, 42, 43) umfassen, die durch nicht ebene Formen gebildet ist.

11. Schwenkdämpfer (1) nach einem der Ansprüche 1 bis 10,
**dadurch gekennzeichnet, dass** die Verteilung des Elements aus Elastomermaterial (5) auf beiden Seiten des Käfigs (35), wobei der Käfig (35) einen Mittelpunkt aufweist, der dem Drehpunkt des Kugelgelenks (2) entspricht, so konfiguriert ist, dass Kräfte, die durch die Verformungen des Elements aus Elastomermaterial (5) hervorgerufen werden, die sich aus den Relativbewegungen der beiden Verstärkungen (3, 4) ergeben, zumindest in Bezug auf eine erste, senkrecht zu der Längsachse (A1) durch die Käfigmitte (35) verlaufende vertikale Ebene (P1) gleichmäßig auf beide Seiten des Käfigs (35) verteilt sind.

12. Schwenkdämpfer (1) nach einem der Ansprüche 1 bis 11,
**dadurch gekennzeichnet, dass** die Verteilung des Elements aus Elastomermaterial (5) auf beiden Seiten des Käfigs (35), wobei der Käfig (35) einen Mittelpunkt aufweist, der dem Drehpunkt des Kugelgelenks (2) entspricht, so konfiguriert ist, dass der Schwerpunkt der durch die Verformungen des Elements aus Elastomermaterial (5) hervorgerufenen Kräfte, die sich aus den Relativbewegungen der beiden Verstärkungen (3, 4) ergeben, in der Mitte des Käfigs (35) angeordnet ist, so dass die durch die Verformungen des Elements aus Elastomermaterial (5) induzierten Kräfte gleichmäßig und ausgeglichen auf beiden Seiten des Käfigs (35) in Bezug auf eine erste, zu der Längsachse (A1) senkrechte, durch die Mitte des Käfigs (35) verlaufende vertikale Ebene (P1), in Bezug auf eine zweite, zu einer Querachse (A2) des Schwenkdämpfers (1) senkrechte und durch die Mitte des Käfigs (35) verlaufende vertikale Ebene (P2) und in Bezug auf eine dritte, zu einer vertikalen Achse (A3) des Schwenkdämpfers (1) senkrechte und durch die Mitte des Käfigs (35) verlaufende horizontale Ebene (P3) verteilt sind, wobei die Querachse (A2) senkrecht zu der Längsachse (A1) ist und die vertikale Achse (A3) senkrecht zu der Querachse (A2) und der Längsachse (A1) ist.

13. Schwenkdämpfer (1) nach einem der Ansprüche 1 bis 12,
**dadurch gekennzeichnet, dass** das Element aus Elastomermaterial (5) nicht in der zentralen Zone (11) angeordnet ist.

14. Schwenkdämpfer (1) nach Anspruch 13,
**dadurch gekennzeichnet, dass** die innere Verstärkung (3) Rippen (36) aufweist, die in der zentralen Zone (11) angeordnet sind, um die Ableitung der an dem Kugelgelenk (2) erzeugten Wärme zu ermöglichen.

15. Blatt (20) mit einer Haut (24) und mindestens einem Holm (21), der konfiguriert ist, um mit einer Nabe (61) eines Rotors (60) eines Luftfahrzeugs verbunden zu sein,
**dadurch gekennzeichnet, dass** das Blatt (20) einen Schwenkdämpfer (1) nach einem der Ansprüche 1 bis 14 aufweist, der zumindest teilweise in dem Blatt (20) angeordnet ist.

16. Blatt (20) nach Anspruch 15,
**dadurch gekennzeichnet, dass** der Holm (21) einen unteren Schenkel (22) und einen oberen Schenkel (23) in einem Bereich der Wurzel des Blattes (20) aufweist, wobei der untere (22) und obere (23) Schenkel konfiguriert sind, um mit der Nabe (31) verbunden zu sein, der Schwenkdämpfer (1) innerhalb des Blattes (20) zwischen dem unteren Schenkel (22) und dem oberen Schenkel (23) angeordnet ist, wobei die äußere Verstärkung (4) des Schwenkdämpfers (1) mit dem unteren Schenkel (22) und dem oberen Schenkel (23) fest verbunden ist.

17. Blatt (20) nach Anspruch 15,
**dadurch gekennzeichnet, dass** das Blatt (20) eine Muffe (25) aufweist, die an einem Bereich der Wurzel des Blattes (20) angeordnet ist, wobei die Muffe (25) einen unteren Schenkel (22) und einen oberen Schenkel (23) aufweist, wobei der untere (22) und der obere (23) Schenkel konfiguriert sind, um einerseits mit der Nabe (31) und andererseits mit einem Holm (21) des Blattes (20) fest verbunden zu werden, wobei der Schwenkdämpfer (1) innerhalb der Muffe (25) zwischen dem unteren Schenkel (22) und dem oberen Schenkel (23) angeordnet ist, wobei die äußere Verstärkung (4) des Schwenkdämpfers (1) an dem unteren (22) und oberen (23) Schenkel der Muffe (25) befestigt ist.

18. Blatt (20) nach einem der Ansprüche 15 bis 17,
**dadurch gekennzeichnet, dass** die Haut (24) eine Verkleidung des Blattes (20) bis zu seiner Wurzel bildet, um den Luftwiderstand des Blattes (20) zu minimieren, und Öffnungen (26, 27) aufweist, die konfiguriert sind, um eine Sicht auf den Schwenkdämpfer (1) zu ermöglichen.

19. Blatt (20) nach einem der Ansprüche 15 bis 18,
**dadurch gekennzeichnet, dass** das Blatt (20) ein Auswuchtsystem zum Auswuchten des Rotors (60) aufweist, das innerhalb des Blattes (20) integriert ist, um den Luftwiderstand des Blattes (20) und die aerodynamischen Störungen, die das Blatt (20) beeinflussen, zu minimieren.

20. Rotor (60) für ein Drehflügelluftfahrzeug, mit
- einer um eine Drehachse (65) drehbar angetriebenen Nabe (61), die einen Zentralkörper (62), mindestens zwei flexible Arme (63) und eine Führungsachse (64) für jeden flexiblen Arm (63) umfasst,
- mindestens zwei mit einem Schwenkdämpfer (1) versehenen Blättern (20), wobei ein Kugelgelenk (14) des Schwenkdämpfers (1) jedes Blattes (20) mit einer Führungsachse (64) des Rotors (60) verbunden ist, und
- einem sphärischen Drucklager (68) für jedes Blatt (20), das das Blatt (20) mit der Nabe (61) verbindet,
**dadurch gekennzeichnet, dass** jedes Blatt (20) nach einem der Ansprüche 15 bis 19 ist.

21. Rotor (60) nach Anspruch 20,
**dadurch gekennzeichnet, dass** die Nabe (61) mindestens zwei verschiedene Komponenten (62, 63, 64) umfasst, die durch mindestens eine Befestigungsvorrichtung (66) miteinander verbunden sind, wobei der Zentralkörper (62) von den flexiblen Armen (63) verschieden ist.

## Claims

1. Lead-lag damper (1) for a blade (20) of a rotor (60) of a rotary wing aircraft, the rotor (60) being provided with a hub (61) that is driven in rotation, the lead-lag damper (1) comprising:
- a longitudinal axis (A1) for coinciding with the longitudinal axis of the blade (20);
- a ball-joint connection (2) for connecting to the hub (61);
- two strength members (3, 4), one of the two strength members (3, 4) being referred to as an "inner strength member" (3) and being provided with a cage (35) in which the ball-joint connection (2) is arranged, the other of the two strength members (3, 4) being referred to as the "outer strength member" (4) and being for securing to the blade (20); and
- a member made of elastomer material (5) that is arranged between the inner strength member (3) and the outer strength member (4);
the two strength members (3, 4) and the elastomer material member (5) being arranged on both sides of the cage (35); the inner strength member (3) and the outer strength member (4) respectively having at least two walls (31, 41) and at least one secondary partition (33, 43) in contact with the elastomer material member (5) and configured so as to increase the contact areas between the elastomer material member (5) and the two strength members (3, 4), the inner strength member (3) including at least one main partition (32) connecting together at least two walls (31) of the inner strength member (3); wherein the secondary partitions (33, 43) subdivide the elastomer material member (5) into a plurality of distinct blocks (53) of elastomer material, the blocks (53) being situated between two secondary partitions (33, 43) or else between a main partition (32) and a secondary partition (33, 43) so that relative movements between the two strength members (3, 4) as a result of movements of the blade (20) are damped by deformations of the elastomer material member (5), the lead-lag damper (1) being for arranging at least in part inside the blade (2),
**characterised in that** the two strength members (3,4) and the elastomer material member (5) extend, at least along the longitudinal axis (A1), either side of the cage (35), beyond a central zone (11) in which the cage (35) is situated, the central zone (11) longitudinally occupying a length not less than the length of the cage (35).

2. Lead-lag damper (1) according to claim 1, **characterised in that** the lead-lag damper (1) includes along the longitudinal axis (A1) an upstream zone (12) situated upstream from the central zone (11), and a downstream zone (13) situated downstream from the central zone (11), the two strength members (3, 4) covering the upstream (12), central (11), and downstream (13) zones and the elastomer material member (5) covering at least the upstream (12) and downstream (13) zones.

3. Lead-lag damper (1) according to either of claims 1 or 2, **characterised in that** the outer strength member (4) includes at least one main partition (42) connecting together at least two walls (41) of the outer strength member (4), the blocks (53) of the elastomer material member (5) being situated between two secondary partitions (33, 43), or else between a main partition (32, 42) and a secondary partition (33, 43).

4. Lead-lag damper (1) according to any one of claims 1 to 3, **characterised in that** the walls (41) of the outer strength member (4) are connected together via the inner strength member (3) and the elastomer material member (5).

5. Lead-lag damper (1) according to any one of claims 1 to 4, **characterised in that** the elastomer material member (5) has at least two distinct blocks (51, 52, 53) of elastomer material, each block (51, 52, 53) adhering to at least one wall (31) or to at least one partition (32, 33) of the inner strength member (3) and to at least one wall (41) or to a partition (42, 43) of the outer strength member (4).

6. Lead-lag damper (1) according to any one of claims 1 to 5, **characterised in that** at least one block (51, 52, 53) of the elastomer material member (5) is arranged between the inner strength member (3) and the outer strength member (4) such that the block (51, 52, 53) is of constant section.

7. Lead-lag damper (1) according to any one of claims 1 to 5, **characterised in that** at least one block (51, 52, 53) of the elastomer material member (5) is arranged between the inner strength member (3) and the outer strength member (4) in such a manner that the block (51, 52, 53) is of section that varies so that the block (51, 52, 53) is stressed uniformly during the relative movements between the inner strength member (3) and the outer strength member (4).

8. Lead-lag damper (1) according to any one of claims 1 to 7, **characterised in that** at least one block (51, 52, 53) of the elastomer material member (5) includes an insert embedded in the block (51, 52, 53) so as to improve the stiffness of the block (51, 52, 53).

9. Lead-lag damper (1) according to any one of claims 1 to 8, **characterised in that** the two strength members (3, 4) include at least one wall (31, 41) and/or at least one partition (32, 33, 42, 43) parallel to a transverse axis (A2) of the lead-lag damper (1), the transverse axis (A2) being perpendicular to the longitudinal axis (A1).

10. Lead-lag damper (1) according to any one of claims 1 to 9, **characterised in that** the two strength members (3, 4) comprise at least one wall (31, 41) and/or at least one partition (32, 33, 42, 43) constituted by shapes that are not plane.

11. Lead-lag damper (1) according to any one of claims 1 to 10, **characterised in that** the distribution of the elastomer material member (5) on both sides of the cage (35), where the cage (35) has a centre corresponding to the centre of rotation of the ball-joint connection (2), is configured in such a manner that the forces induced by the deformations of the elastomer material member (5) as a result of the relative movements of the two strength members (3, 4) are distributed uniformly on both sides of the cage (35), at least relative to a vertical first plane (P1) perpendicular to the longitudinal axis (A1) passing through the centre of the cage (35).

12. Lead-lag damper (1) according to any one of claims 1 to 11, **characterised in that** the distribution of the elastomer material member (5) on both sides of the cage (35), the cage (35) having a centre corresponding to the centre of rotation of the ball-joint connection (2), is configured so that the centre of gravity of the forces induced by the deformations of the elastomer material member (5) resulting from the relative movements of the two strength members (3, 4) is situated at the centre of the cage (35) such that the forces induced by the deformations of the elastomer material member (5) are distributed uniformly and in a balanced manner on both sides of the cage (35) relative to a vertical first plane (P1) perpendicular to the longitudinal axis (A1) and passing via the centre of the cage (35), relative to a vertical second plane (P2) perpendicular to a transverse axis (A2) of the lead-lag damper (1) and passing via the centre of the cage (35), and relative to a horizontal third plane (P3) perpendicular to a vertical axis (A3) of the lead-lag damper (1) and passing via the centre of the cage (35), the transverse axis (A2) being perpendicular to the longitudinal axis (A1), and the vertical axis (A3) being perpendicular to the transverse axis (A2) and to the longitudinal axis (A1).

13. Lead-lag damper (1) according to any one of claims 1 to 12, **characterised in that** the elastomer material member (5) is not arranged in the central zone (11).

14. Lead-lag damper (1) according to claim 13, **characterised in that** the inner strength member (3) has fins (36) arranged in the central zone (11) so as to dissipate the heat generated in the ball-joint connection (2).

15. Blade (20) having a skin (24) and at least one spar (21) configured to be connected to a hub (61) of a rotor (60) of an aircraft, **characterised in that** the blade (20) includes the lead-lag damper (1) according to any one of claims 1 to 14 and arranged at least in part inside the blade (20).

16. Blade (20) according to claim 15, **characterised in that** the spar (21) includes a bottom branch (22) and a top branch (23) in a root zone of the blade (20), the bottom (22) and top (23) branches being configured to be connected to the hub (31), the lead-lag damper (1) being arranged inside the blade (20) between the bottom branch (22) and the top branch (23), the outer strength member (4) of the lead-lag damper (1) being secured to the bottom branch (22) and to the top branch (23).

17. Blade according to claim 15, **characterised in that** the blade (20) includes a cuff (25) arranged in a root zone of the blade (20), the cuff (25) comprising a bottom branch (22) and a top branch (23), the bottom (22) and top (23) branches being configured to be secured firstly to the hub (31) and secondly to a spar (21) of the blade (20), the lead-lag damper (1) being arranged inside the cuff (25) between the bottom branch (22) and the top branch (23), the outer strength member (4) of the lead-lag damper (1) being secured to the bottom (22) and top (23) branches of the cuff (25).

18. Blade (20) according to any one of claims 15 to 17, **characterised in that** the skin (24) fairs the blade (20) to its root in order to minimize the aerodynamic drag of the blade (20) and includes openings (26, 27) configured to enable the lead-lag damper (1) to be viewed.

19. Blade (20) according to any one of claims 15 to 18, **characterised in that** the blade (20) includes a balancing system for balancing the rotor (60) and that is integrated inside the blade (20) in order to minimize the aerodynamic drag of the blade (20) and the aerodynamic disturbances that affect the blade (20).

20. Rotary wing aircraft rotor (60) comprising:
- a hub (61) driven in rotation about an axis of rotation (65) and comprising a central body (62), at least two flexible arms (63) and a guide pin (64) for each flexible arm (63);
- at least two blades (20) each provided with a lead-lag damper (1), a ball-joint connection (14) of the lead-lag damper (1) of each blade (20) being connected to a guide pin (64) of the rotor (60); and
- a spherical abutment (68) for each blade (20) connecting the blade (20) to the hub (61),
**characterised in that** each blade (20) is in accordance with any one of claims 15 to 19.

21. Rotor (60) according to claim 20, **characterised in that** the hub (61) comprises at least two distinct components (62, 63, 64) that are secured together by at least one fastener device (66), the central body (62) being distinct from the flexible arms (63).
